# EUROPEAN PATENT SPECIFICATION

(11) **EP 3 376 271 B1**
(45) Date of publication and mention of the grant of the patent: **01.09.2021**
(21) Application number: 15910552.7
(22) Date of filing: 17.12.2015
(51) Int. Cl.: G02B 6/38, G02B 6/44

(54) **OPTICAL FIBRE ADAPTER**
FASEROPTISCHER ADAPTER
ADAPTATEUR DE FIBRE OPTIQUE

(43) Date of publication of application: 19.09.2018
(73) Proprietor: Huawei Technologies Co., Ltd., Longgang District Shenzhen, Guangdong 518129 (CN)
(72) Inventor: HUANG, Xuesong, Shenzhen Guangdong 518129 (CN); SHI, Deyi, Shenzhen Guangdong 518129 (CN); YANG, Anliang, Shenzhen Guangdong 518129 (CN); WANG, Yeren, Shenzhen Guangdong 518129 (CN)
(74) Representative: Gill Jennings & Every LLP
(86) International application number: PCT/CN2015/097743
(87) International publication number: WO 2017/101081

(56) References cited:
- EP-A2- 1 170 608
- EP-A2- 2 848 970
- EP-A2- 2 848 970
- WO-A1-2015/111413
- CN-A- 101 726 804
- CN-A- 102 305 962
- CN-A- 103 168 263
- CN-A- 104 238 033
- CN-U- 204 515 191
- US-A1- 2003 147 597
- US-A1- 2013 108 233
- US-A1- 2013 272 671
- US-A1- 2014 016 902
- US-B1- 6 702 475

## Description

### TECHNICAL FIELD

The present invention relates to the field of optical communications devices, and in particular, to a fiber adapter.

### BACKGROUND

A fiber adapter is a passive component implementing an active connection between two optical fiber connectors. To prevent dust in an ambient use environment from affecting performance of the fiber adapter, and prevent a laser emitted from the fiber adapter from hurting a user, usually, dustproof caps are respectively added to two ends of the fiber adapter. Conventional dustproof caps are directly inserted at two ends of a fiber adapter. When the fiber adapter needs to be used, the dustproof caps need to be first removed, and then an optical fiber connector is inserted. When the fiber adapter is not in use, the dustproof caps need to be manually mounted. In this way, the dustproof caps need to be separately managed, causing inconvenience in use. US6702475 describes a system for releasing an optical connector adapter from an optical connector. Other optical connectors and adapters are described in US2014/0016902, EP1170608, US2003/0147597 and EP2848970. Adapters comprising hinged dust proof covers are disclosed in US-A1-2013/108233 and US-A1-2013/272671.

### SUMMARY

In view of this, the present invention provides a fiber adapter, which is convenient in management while having a dustproof effect, and is more practical.

The present invention provides a fiber adapter according to claim 1 of the appended claims.

The dustproof cover of the fiber adapter provided in the embodiments of the present invention can be locked when being turned over to a horizontal position. When an optical fiber connector is inserted, the locked dustproof cover can be unlocked. After the connector is pulled out, the dustproof cover can be further automatically closed, so that an operation can be performed with one hand during actual insertion and pull-out operations. The fiber adapter is simple and easy to use. located outside a protruding portion of the claw (8d).

According to the invention, a base (5a) on a bottom portion of the second adapter body (5) is provided with two circular holes; the first circular hole is used to adapt to the rotating shaft (8b) disposed on the dustproof cover, so that the dustproof cover (8) can be turned over relative to the second adapter body (5); and the second circular hole is used to adapt to the projection (8c) disposed on the dustproof cover (8), and when the dustproof cover (8) is turned over, the projection (8c) can be jammed in the second circular hole, so that the dustproof cover (8) is turned over to a horizontal plane and does not rebound. By means of the technical feature, the dustproof cover of the fiber adapter provided in the embodiments of the present invention can be locked when being turned over to a horizontal position. When an optical fiber connector is inserted, the locked dustproof cover can be unlocked. After the connector is pulled out, the dustproof cover can be further automatically closed, so that an operation can be performed with one hand during actual insertion and pull-out operations. The fiber adapter is simple and easy to use.

According to an embodiment of the invention, the inclined block (6) includes an upper component and a lower component, the upper component is a trapezoid, the lower component is a cuboid, a surface (6a) of the upper component is a bevel, and the cuboid is larger than the hole (5b), so that the cuboid cannot slide into inside of the second adapter body (5) through the hole (5b).

According to a further embodiment of the invention, the bottom surface of the second adapter body (5) is provided with buckles (5c) between two bases (5a), and a top end of the buckle (5c) is hook-shaped and is used to prevent the inclined block (6) from sliding out of the hole (5b).

In an embodiment of the invention, the pin shaft (8e) is used to fasten the rotary spring (7) to apply a torsion force enabling the dustproof cover (8) to be automatically closed.

According to the invention, when the optical fiber connector is inserted, the optical fiber connector presses the inclined block (6), so that another end (6b) of the inclined block (6) presses the projection (8c) of the dustproof cover (8) outward, and the projection (8c) bounces out of the second circular hole of the base (5a).

In an embodiment of the invention, when the optical fiber connector is pulled out, the dustproof cover (8) is automatically closed under an action of the rotary spring (7).

The dustproof cover may be added to an end of an existing universal fiber adapter to form a novel fiber adapter. The novel fiber adapter is convenient in management while having a dustproof effect, and is more practical. In addition, because a body structure and a production technology of the fiber adapter applied to the solution are consistent with those of the existing universal adapter, optical performance and mechanical performance of the fiber adapter are ensured not to be affected.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1a is a schematic diagram of a fiber adapter according to the present invention;
FIG. 1b is another schematic diagram of the fiber adapter of FIG. 1;
FIG. 1c is another schematic diagram of the fiber adapter of FIG. 1;
FIG. 2 is a locally enlarged schematic diagram of a rotary spring 7 and inclined blocks 6 according to the present invention;
FIG. 3 is a schematic exploded view of a fiber adapter according to an embodiment of the present invention;
FIG. 4 is a locally enlarged schematic diagram of a second adapter body 5 according to the present invention;
FIG. 5 is a locally enlarged schematic diagram of a dustproof cover 8 according to the present invention;
FIG. 6 is a schematic enlarged view of an inclined block 6 according to the present invention;
FIG. 7 is a schematic structural diagram before an optical fiber connector is inserted into a fiber adapter according to an embodiment of the present invention;
FIG. 8 is a schematic structural diagram when an optical fiber connector is inserted into a fiber adapter according to an embodiment of the present invention; and
FIG. 9 is a schematic structural diagram when an optical fiber connector is pulled out from a fiber adapter according to an embodiment of the present invention.

### DESCRIPTION OF EMBODIMENTS

The following clearly and completely describes the technical solutions in the embodiments of the present invention with reference to the accompanying drawings.

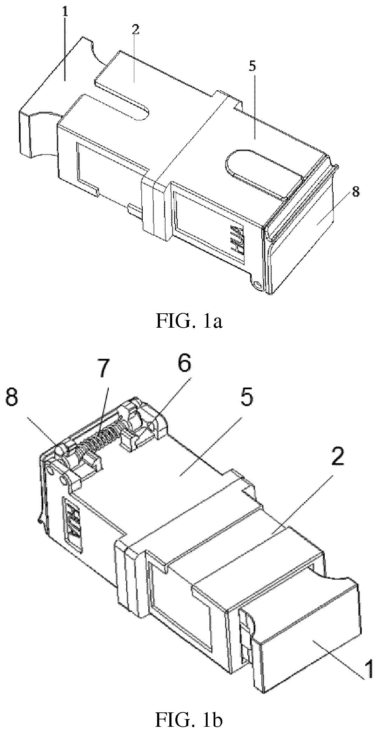

The present invention provides a fiber adapter. As shown in FIG. 1a, the fiber adapter includes a dustproof cap 1, a first adapter body 2, a second adapter body 5, and a dustproof cover 8. A structure and an assembly manner of the dustproof cap 1, the first adapter body 2, and the second adapter body 5 are consistent with those of an existing SC (Square Connector, square connector) type fiber adapter. Therefore, a specific structure and connection manner of the three components are not described herein. Certainly, an LC (Lucent Connector, Lucent connector) type fiber adapter, an FC type fiber adapter, an ST type fiber adapter, an MU type fiber adapter, an MT type fiber adapter, or an existing fiber adapter in the prior art may alternatively be used as the fiber adapter provided in the present invention. For connection manners of various types of fiber adapters that are listed above and dustproof covers, refer to the following description. It should be understood that this embodiment of the present invention is described only by using an SC type fiber adapter as an example.

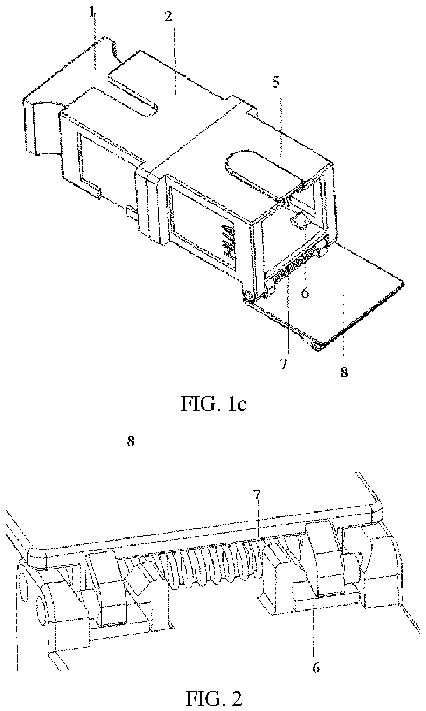

The dustproof cover 8, a rotary spring 7, and inclined blocks 6 are added based on an existing fiber adapter (only using the SC type fiber adapter as an example), to form the fiber adapter in this embodiment of the present invention. As shown in FIG. 1b, FIG. 1b is a schematic structural diagram showing that the dustproof cover of the fiber adapter is not turned over according to this embodiment of the present invention. The dustproof cover 8 is mounted at one end of the second adapter body 5 by using the rotary spring 7. As shown in FIG. 1c, FIG. 1c is a schematic structural diagram when the dustproof cover 8 of the fiber adapter is turned over to a horizontal position according to this embodiment of the present invention.

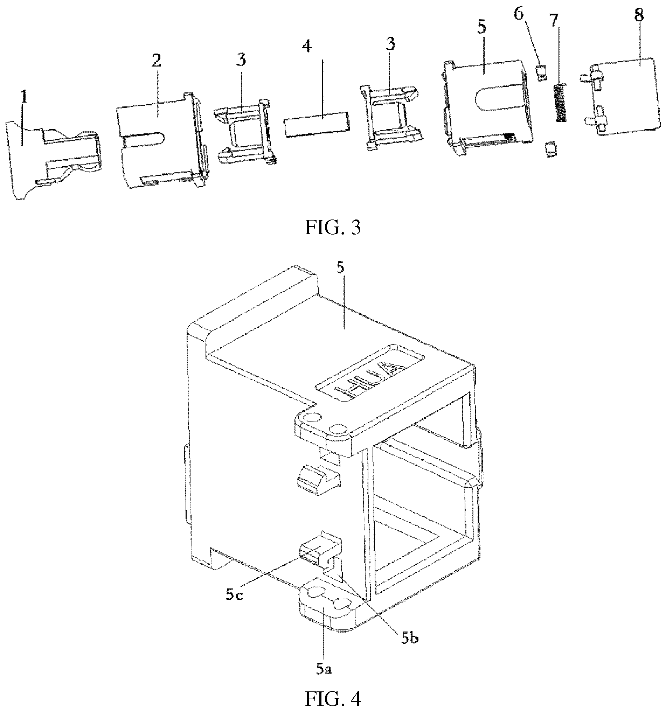

Specifically, as shown in FIG. 3, FIG. 3 is a schematic exploded view of a fiber adapter according to an embodiment of the present invention. The fiber adapter includes a dustproof cap 1, a first adapter body 2, locks 3, a ceramic socket 4, a second adapter body 5, inclined blocks 6, a rotary spring 7, and a dustproof cover 8. The dustproof cap 1, the first adapter body 2, the locks 3, and the ceramic socket 4 are consistent with components of a common SC (Square Connector, square connector), and other description is not provided herein.

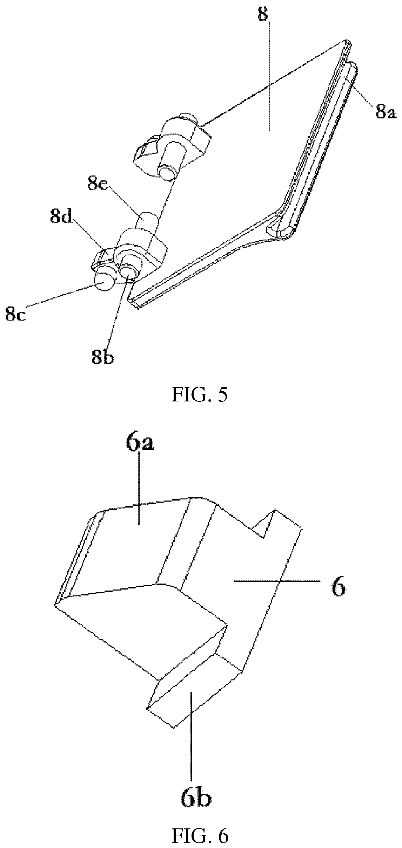

For a specific structure of the dustproof cover 8, refer to FIG. 5. The dustproof cover 8 is provided with a hand-clasping position 8a used to turn over the dustproof cover 8. The hand-clasping position 8a may be a groove provided at a top end of the dustproof cover, may be a handle disposed on the dustproof cover, may be a circular hole provided on the dustproof cover, or may be a tether tied on the dustproof cover. The hand-clasping position 8a in this embodiment of the present invention may alternatively be another handle that is seen in daily life and that is used to facilitate opening of a component.

As shown in FIG. 5, an end that is of the dustproof cover 8 and that is connected to the second adapter body 5 is provided with a claw 8d. The claw 8d is fastened on the dustproof cover 8, and the claw 8d includes a protruding portion (not shown in the figure). The claw 8d is provided with a rotating shaft 8b, a pin shaft 8e, and a projection 8c, and the projection 8c is located outside the protruding portion of the claw 8d. Preferably, there are two claws 8d. Certainly, there may be at least one claw 8d. The claw 8d may also be referred to as a connecting piece, used to connect to the second adapter body 5. The projection 8c may be a projection of any shape, and is preferably of a cylindrical shape. The rotating shaft 8b is of a cylindrical shape, and the rotating shaft 8b is used to be inserted into a first circular hole (as shown in FIG. 4) provided in a base 5a on a bottom portion of the second adapter body 5, so that the dustproof cover can be turned over relative to the second adapter body 5. The first circular hole may alternatively be referred to as a coupling portion, used to couple to the rotating shaft 8b.

The pin shaft 8e is preferably of a cylindrical shape, and is mounted on a side that is of the claw 8d and that is opposite to the rotating shaft 8b. There are two pin shafts symmetrically disposed inside the two claws 8d of the dustproof cover. The two pin shafts 8e are used to mount the rotary spring 7. One end of the rotary spring 7 sleeves on a first pin shaft 8e and abuts against a first claw 8d, and another end of the rotary spring is used to sleeve on a second pin shaft 8e and abuts against a second claw 8d, so that the rotary spring 7 is mounted on the two pin shafts 8e, to apply a torsion force.

The projection 8c is disposed outside the protruding portion of the claw 8d, and is preferably of a cylindrical shape, or may be of another column shape. When the dustproof cover is turned over, the projection 8c can be jammed in a second circular hole provided in the base 5a on the bottom portion of the second adapter body 5, so that the dustproof cover can remain horizontal. Details are shown in FIG. 1c.

As shown in FIG. 4, FIG. 4 is a schematic enlarged view of a bottom surface of the second adapter body 5. Two ends of the bottom surface of the second adapter body 5 are respectively provided with two bases 5a, and each base 5a is provided with two circular holes. The two circular holes are referred to as a first circular hole and a second circular hole. In addition, the bottom surface of the second adapter body 5 is provided, between the two bases 5a, with two opposite buckles 5c and holes 5b for the inclined block 6 to vertically slide. A shape of the hole 5b may be a circular shape, a square shape, or another shape, and is not limited herein. The buckle 5c has a height relative to the bottom surface of the second adapter body 5. A top end of the buckle 5c is formed into a hook shape bent toward a side, and is used to prevent the inclined block 6 from sliding out of the hole 5b. Preferably, the height of the buckle 5c is less than a height of the inclined block 6. The first circular hole is used to adapt to the rotating shaft 8b disposed on the dustproof cover, so that the dustproof cover 8 can be turned over relative to the second adapter body 5. The second circular hole is used to adapt to the projection 8c disposed on the dustproof cover 8, and when the dustproof cover 8 is turned over, the projection 8c can be jammed in the second circular hole, so that the dustproof cover 8 is turned over to a horizontal plane and does not rebound.

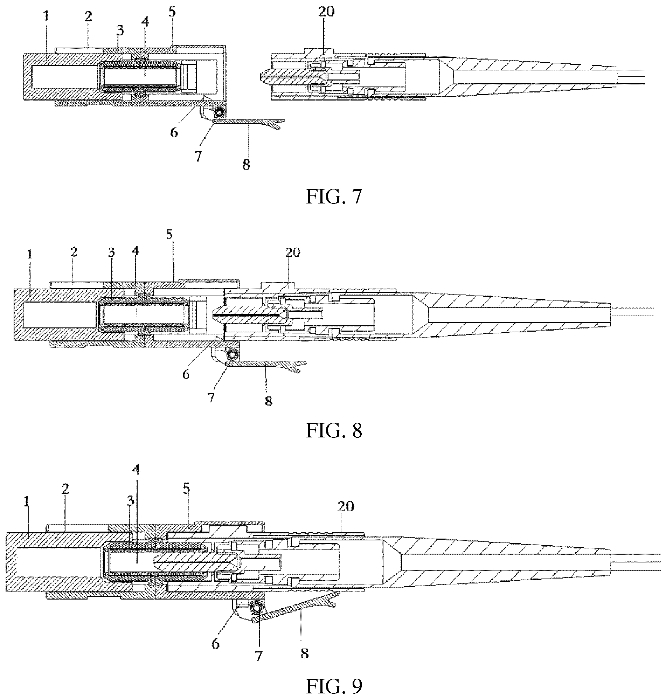

As shown in FIG. 6, FIG. 6 is a schematic structural diagram of the inclined block 6. The inclined block 6 is embedded into the bottom surface of the second adapter body through the hole provided in the bottom surface of the second adapter body 5. The inclined block 6 includes a trapezoid and a cuboid. The trapezoid of the inclined block 6 is referred to as an upper component, and the cuboid of the inclined block 6 is referred to as a lower component. An end 6a of the upper component is a bevel, and the end 6a is located inside the second adapter body 5. The lower component of the inclined block 6 is a cuboid block. The cuboid block should be larger than the hole 5b, so that the cuboid block cannot slide into inside of the second adapter body 5 through the hole 5b. In addition, a length of the inclined block 6 (a length form the bevel 6a to a bottom end 6b) should be greater than the height of the buckle 5c, so that the bevel 6a of the inclined block 6 protrudes from an inner side of the bottom surface of the second adapter body 5. Specifically, as shown in FIG. 1c, it can be learned from FIG. 1c that the bevel 6a protrudes from the inner side of the bottom surface of the second adapter body 5. When the dustproof cover 8 is turned over to a horizontal direction and remains in the horizontal direction, in this case, if an optical fiber connector is inserted into the fiber adapter provided the optical fiber connector presses the bevel 6a of the inclined block 6, so that another end 6b of the inclined block presses the projection 8c of the dustproof cover 8 outward, the projection 8c bounces out of the second circular hole of the base 5a, and the dustproof cover 8 bounces, under an action of the rotary spring 7, to be of a shape shown in FIG. 9. The dustproof cover 8 abuts against a side wall of the optical fiber connector. When the optical fiber connector is pulled out from the fiber adapter the dustproof cover recovers back to an initial state under the action of the rotary spring 7, as shown in FIG. 1a.

The fiber adapter provided in the present invention can implement a one-hand operation. Details are as follows: The dustproof cover in the initial state shown in FIG. 1a is manually turned over to the horizontal position shown in FIG. 1c. Because under an action of a hand, the projection 8c on the dustproof cover slides into the second circular hole in the base 5a on the bottom portion of the second adapter body 5, a torsion force of the rotary spring 7 is counterbalanced and the dustproof cover remains at the position. In addition, the inclined block 6 is lifted by the claw 8d of the dustproof cover 8, and is higher than a bottom surface of an inner cavity of the adapter, so that the dustproof cover can remain at the horizontal position. In this case, the optical fiber connector can be inserted into the adapter with one hand, which is simple and convenient, and improves operation efficiency. When the optical fiber connector needs to be pulled out from the adapter, the dustproof cover 8 rotates anticlockwise under the action of the rotary spring 7 and is automatically closed. The dustproof cover 8 automatically recovers back to the initial state shown in FIG. 1a. Limiting of the inclined block 6 between positions at upper and lower ends is implemented by using the buckle 5c of the second adapter body 5 and a boss 6b on the bottom surface, and the inclined block 6 does not fall out. When the inclined block 6 is lifted upward by the claw 8d, the boss 6b on the bottom surface of the inclined block 6 comes into contact with the bottom surface of the second adapter body 5, to implement the limiting. When the inclined block 6 is pressed downward by the optical fiber connector 20, the bottom surface of the inclined block 6 comes into contact with the buckle 5c, to implement the limiting.

Because a body structure and a production technology of the fiber adapter applied to the solution are consistent with those of the existing universal adapter, optical performance and mechanical performance of the fiber adapter are ensured not to be affected.

In addition, the dustproof cover of the fiber adapter provided in the present invention can be locked when being turned over to the horizontal position. When the optical fiber connector is inserted, the locked dustproof cover can be unlocked. After the connector is pulled out, the dustproof cover can be further automatically closed, so that an operation can be performed with one hand during actual insertion and pull-out operations. The fiber adapter is simple and easy to use.

The foregoing descriptions are merely example implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention is defined by the claims.

## Claims

1. A fiber adapter, comprising a dustproof cap (1), a first adapter body (2), and a second adapter body (5), wherein the fiber adapter further comprises a dustproof cover (8), a rotary spring (7), and inclined blocks (6), wherein the dustproof cover (8) is mounted at one end of the second adapter body (5) by using the rotary spring (7); and
the inclined block (6) is embedded into a bottom surface of the second adapter body (5) through a hole (5b) provided in the bottom surface of the second adapter body (5), and the inclined block (6) can vertically slide through the hole (5b);
wherein an end that is of the dustproof cover (8) and that is connected to the second adapter body (5) is provided with a claw (8d); the claw (8d) is fastened on the dustproof cover (8); the claw (8d) is provided with a rotating shaft (8b), a pin shaft (8e), and a projection (8c); and the projection (8c) is located outside a protruding portion of the claw (8d).
wherein a base (5a) on a bottom portion of the second adapter body (5) is provided with a first circular hole and a second circular hole; the first circular hole is used to adapt to the rotating shaft (8b) disposed on the dustproof cover, so that the dustproof cover (8) can be turned over relative to the second adapter body (5); and the second circular hole is used to adapt to the projection (8c) disposed on the dustproof cover (8), and when the dustproof cover (8) is turned over, the projection (8c) can be jammed in the second circular hole, so that the dustproof cover (8) is turned over to a horizontal plane and does not rebound;
the fiber adapter being further configured such that, when an optical fiber connector is inserted, the optical fiber connector presses the inclined block (6), so that another end (6b) of the inclined block (6) presses the projection (8c) of the dustproof cover (8) outward, and the projection (8c) bounces out of the second circular hole of the base (5a).

2. The fiber adapter according to claim 1, wherein the inclined block (6) comprises an upper component and a lower component, the upper component is a trapezoid, the lower component is a cuboid, a surface (6a) of the upper component is a bevel, and the cuboid is larger than the hole (5b), so that the cuboid cannot slide into inside of the second adapter body (5) through the hole (5b).

3. The fiber adapter according to any one of claims 1 or claim 2, wherein the bottom surface of the second adapter body (5) is provided with buckles (5c) between two bases (5a), and a top end of the buckle (5c) is hook-shaped and is used to prevent the inclined block (6) from sliding out of the hole (5b).

4. The fiber adapter according to any of claims 1 to 3, wherein the pin shaft (8e) is used to fasten the rotary spring (7) to apply a torsion force enabling the dustproof cover (8) to be automatically closed.

5. The fiber adapter according to any one of claims 1 to 4, wherein when the optical fiber connector is pulled out, the dustproof cover (8) is automatically closed under an action of the rotary spring (7).

## Patentansprüche

1. Faseradapter, umfassend eine staubdichte Kappe (1), ein erstes Adaptergehäuse (2) und ein zweites Adaptergehäuse (5), wobei der Faseradapter ferner eine staubdichte Abdeckung (8), eine Drehfeder (7) und Schrägblöcke (6) umfasst, wobei die staubdichte Abdeckung (8) durch Verwenden der Drehfeder (7) an einem Ende des zweiten Adaptergehäuses (5) befestigt ist; und
wobei der Schrägblock (6) durch ein Loch (5b), das in der Unterseite des zweiten Adaptergehäuses (5) bereitgestellt ist, in eine Unterseite des zweiten Adaptergehäuses (5) eingebettet ist und der Schrägblock (6) vertikal durch das Loch (5b) gleiten kann; wobei ein Ende der staubdichten Abdeckung (8), das mit dem zweiten Adaptergehäuse (5) verbunden ist, mit einer Klaue (8d) versehen ist; die Klaue (8d) an der staubdichten Abdeckung (8) befestigt ist; die Klaue (8d) mit einer Drehwelle (8b), einer Stiftwelle (8e) und einem Vorsprung (8c) versehen ist und sich der Vorsprung (8c) außerhalb eines vorstehenden Abschnitts der Klaue (8d) befindet;
wobei eine Basis (5a) an einem unteren Abschnitt des zweiten Adaptergehäuses (5) mit einem ersten Kreisloch und einem zweiten Kreisloch versehen ist; das erste Kreisloch zum Anpassen an die Drehwelle (8b), die an der staubdichten Abdeckung angeordnet ist, verwendet wird, sodass die staubdichte Abdeckung (8) bezogen auf das zweite Adaptergehäuse (5) umgeklappt werden kann; und das zweite Kreisloch zum Anpassen an den Vorsprung (8c), der an der staubdichten Abdeckung (8) angeordnet ist, verwendet wird, und wenn die staubdichte Abdeckung (8) umgeklappt wird, der Vorsprung (8c) in das zweite Kreisloch geklemmt werden kann, sodass die staubdichte Abdeckung (8) in eine horizontale Ebene umgeklappt wird und nicht zurückfedert; wobei der Faseradapter ferner derart angeordnet ist, dass, wenn ein faseroptischer Steckverbinder eingeführt wird, der faseroptische Steckverbinder derart gegen den Schrägblock (6) drückt, dass ein anderes Ende (6b) des Schrägblocks (6) den Vorsprung (8c) der staubdichten Abdeckung (8) nach außen drückt und der Vorsprung (8c) aus dem zweiten Kreisloch der Basis (5a) springt.

2. Faseradapter nach Anspruch 1, wobei der Schrägblock (6) eine obere Komponente und eine untere Komponente umfasst, die obere Komponente ein Trapezoid ist, die untere Komponente ein Quader ist, eine Oberfläche (6a) der oberen Komponente eine Schrägkante ist und der Quader größer als das Loch (5b) ist, sodass der Quader nicht durch das Loch (5b) in das zweite Adaptergehäuse (5) gleiten kann.

3. Faseradapter nach einem der Ansprüche 1 oder Anspruch 2, wobei die Unterseite des zweiten Adaptergehäuses (5) mit Klammern (5c) zwischen zwei Basen (5a) versehen ist und ein oberes Ende der Klammer (5c) hakenförmig ist und zum Verhindern, dass der Schrägblock (6) aus dem Loch (5b) gleitet, verwendet wird.

4. Faseradapter nach einem der Ansprüche 1 bis 3, wobei die Stiftwelle (8e) zum Befestigen der Drehfeder (7) zum Aufbringen einer Torsionskraft, die es ermöglicht, dass die staubdichte Abdeckung (8) automatisch geschlossen wird, verwendet wird.

5. Faseradapter nach einem der Ansprüche 1 bis 4, wobei, wenn der faseroptische Steckverbinder herausgezogen wird, die staubdichte Abdeckung (8) unter einer Wirkung der Drehfeder (7) automatisch geschlossen wird.

## Revendications

1. Adaptateur de fibre, comportant un capuchon anti-poussière (1), un premier corps (2) d'adaptateur, et un second corps (5) d'adaptateur, l'adaptateur de fibre comportant en outre un couvercle anti-poussière (8), un ressort (7) de rotation, et des blocs inclinés (6), le couvercle anti-poussière (8) étant monté à une extrémité du second corps (5) d'adaptateur à l'aide du ressort (7) de rotation ; et
le bloc incliné (6) étant encastré dans une surface inférieure du second corps (5) d'adaptateur à travers un trou (5b) pratiqué dans la surface inférieure du second corps (5) d'adaptateur, et le bloc incliné (6) pouvant coulisser verticalement à travers le trou (5b) ;
une extrémité qui appartient au couvercle anti-poussière (8) et qui est reliée au second corps (5) d'adaptateur étant munie d'une griffe (8d) ; la griffe (8d) étant fixée sur le couvercle anti-poussière (8) ; la griffe (8d) étant munie d'un arbre (8b) de rotation, d'un arbre (8e) de broche, et d'une protubérance (8c) ; et la protubérance (8c) étant située à l'extérieur d'une partie saillante de la griffe (8d) ;
une base (5a) sur une partie inférieure du second corps (5) d'adaptateur étant munie d'un premier trou circulaire et d'un second trou circulaire ; le premier trou circulaire étant utilisé pour s'adapter à l'arbre (8b) de rotation disposé sur le couvercle anti-poussière, de telle sorte que le couvercle anti-poussière (8) puisse être retourné par rapport au second corps (5) d'adaptateur ; et le second trou circulaire étant utilisé pour s'adapter à la protubérance (8c) disposée sur le couvercle anti-poussière (8), et lorsque le couvercle anti-poussière (8) est retourné, la protubérance (8c) pouvant être coincée dans le second trou circulaire, de telle sorte que le couvercle anti-poussière (8) soit retourné jusqu'à un plan horizontal et ne rebondisse pas ;
l'adaptateur de fibre étant en outre configuré de telle façon que, lorsqu'un connecteur à fibre optique est inséré, le connecteur à fibre optique appuie sur le bloc incliné (6), de telle sorte qu'une autre extrémité (6b) du bloc incliné (6) presse la protubérance (8c) du couvercle anti-poussière (8) vers l'extérieur, et que la protubérance (8c) saute hors du second trou circulaire de la base (5a).

2. Adaptateur de fibre selon la revendication 1, le bloc incliné (6) comportant un composant supérieur et un composant inférieur, le composant supérieur étant un trapézoïde, le composant inférieur étant un parallélépipède, une surface (6a) du composant supérieur étant un chanfrein, et le parallélépipède étant plus grand que le trou (5b), de telle sorte que le parallélépipède ne puisse pas coulisser jusqu'à l'intérieur du second corps (5) d'adaptateur à travers le trou (5b).

3. Adaptateur de fibre selon l'une quelconque des revendications 1 et revendication 2, la surface inférieure du second corps (5) d'adaptateur étant munie d'agrafes (5c) entre deux bases (5a), et une extrémité supérieure de l'agrafe (5c) présentant la forme d'un croc et étant utilisée pour empêcher le bloc incliné (6) de coulisser hors du trou (5b).

4. Adaptateur de fibre selon l'une quelconque des revendications 1 à 3, l'arbre (8e) de broche étant utilisé pour immobiliser le ressort (7) de rotation afin d'appliquer un effort de torsion permettant au couvercle anti-poussière (8) d'être automatiquement fermé.

5. Adaptateur de fibre selon l'une quelconque des revendications 1 à 4, le couvercle anti-poussière (8) étant automatiquement fermé sous l'action du ressort (7) de rotation, lorsque le connecteur à fibre optique est retiré.
